# EUROPEAN PATENT SPECIFICATION

(11) **EP 1 472 894 B1**
(45) Date of publication and mention of the grant of the patent: **21.08.2013**
(21) Application number: 03702527.7
(22) Date of filing: 22.01.2003
(51) Int. Cl.: H04W 76/00

(54) **METHOD AND SYSTEM FOR TRANSMITTING MESSAGES TO TERMINAL GROUPS**
VERFAHREN UND SYSTEM ZUR NACHRICHTENÜBERTRAGUNG ZU GRUPPEN VON ENDGERÄTEN
PROCEDE ET SYSTEME PERMETTANT DE TRANSMETTRE DES MESSAGES A DES GROUPES DE TERMINAUX

(30) Priority: 04.02.2002 EP 02075486
(43) Date of publication of application: 03.11.2004
(73) Proprietor: Nederlandse Organisatie voor Toegepast -Natuurwetenschappelijk Onderzoek TNO, 2628 VK Delft (NL)
(72) Inventor: VALK, Gerrit, Jan, Edzard, NL-2594 ND The Hague (NL); KASPERS, Sander, NL-7531 VG Enschede (NL); MOOY, Rutger, Martijn, NL-2273 VK Voorburg (NL); MAATMAN, Sander, Vayez, NL-2517 EZ The Hague (NL)
(74) Representative: Jansen, Cornelis Marinus
(86) International application number: PCT/EP2003/000749
(87) International publication number: WO 2003/067908

(56) References cited:
- EP-A- 0 967 753
- WO-A-94/09599
- WO-A-99/39477
- GB-A- 2 327 561
- US-A- 5 959 989
- US-B1- 6 226 686

## Description

### Field of the Invention

The invention refers to a method and a system for transmitting messages from individual user terminals to groups of user terminals via a transmission network under control of a message server.

### Background of the Invention

Systems for broadcasting messages, e.g. of the SMS format which are very popular in the area of mobile telecommunication, are known from W09810608 and W09409599.

W09810608 discloses a system, comprising user stations each of which includes a recipient address storage, a recipient address group selector, and a tele-service signal sender for each member of the selected group of directory numbers automatically in a consecutive order, the group being selectable before a tele-service signal is sent and one of the tele-service signals being completed before a subsequent tele-service signal is automatically sent without requiring intervening user input after one tele-service signal is sent. An alphanumeric message, e.g. an SMS message, is sent in the tele-service signal. The group is selected from stored preset groups of recipient addresses, each group having an individual memory portion in the storage. A memory portion stores data for presenting a group identifier to a user of the mobile station, the group identifier being selected by the user to perform the group selection.
Disadvantageous is that for SMS group broadcasting the each user terminal need to have special storage and processing means which are not "standard" at this moment.

W09409599 discloses a method for transmitting short message in a cellular radio system. A short message being transmitted is first received by a mobile exchange of a cellular radio system. It is checked whether the received short message is to be delivered to one subscriber or to a group of several subscribers. The subscriber numbers of all the subscribers of the group are searched on the basis of a service identifier contained in the short message to be delivered to the group. The short message for each subscriber of the group is copied and sent to the subscribers. For each copied short message, a separate transmission process is initiated to forward the copied short message to the subscribers. Each separate transmission process performs various operations such as checking the home location register of the recipient of the short message.

Disadvantageous of this known method is that each SMS group needs to have its own service ID or, in other words, each SMS group needs its own server node address (telephone number) which can be used by only one SMS group.

WO99/39477 describes the use of group addresses stored in mobile devices. Each mobile device that has stored the address of a group will receive messages addressed to the group. Each mobile device may be a member of a plurality of groups, the device storing the group addresses of each of these groups. The addresses are managed by a manager program in a server, which keeps link information that links the group address to a host that acts as owner of the group. and a list of protocols (port numbers) that are acceptable for group messages.

US 6,226,686 describes a group messaging server for distributing multicast messages to groups of hosts. A new group can be created by means of a creation control message from a host to the group messaging server. Other hosts can join an existing group by transmitting join messages. The group messaging server keeps a list of hosts that have joined the group.

### Summary of the Invention

The present invention aims to provide a solution for the mentioned drawbacks of the known methods or systems. According to the present invention there is provided a method for transmitting messages from individual user terminals to groups of user terminals via a transmission network according to claim 1 and a corresponding system according to claim 8. Embodiments of the invention are defined in dependent claims 1 to 7 and 9.
In the method for transmitting messages from individual user terminals to groups of user terminals via a transmission network under control of a message server, each terminal having a network address, the message server may comprise various network ports, the number of which, however, may be substantially less than the number of SMS groups. Besides, user groups may be formed by terminal users in a very convenient way, without any adaptation of any hardware or software in either the terminals or the message server.

The method comprises next steps for registering terminal or user groups, per group of terminals or terminal users a group identifier is registered, e.g. in a group register within the message server.
To register or to be registered to a group, a link is assigned to the relevant group identifier, comprising the relevant terminal's network address, and a selected one of the server's network ports. That server port is selected thus that the combination of the terminal's network address and the server's network port is not registered before in combination with another, previously registered group identifier. So the contents of the link <terminal network address - server network port> has to be unique, which enables it to be used as a group address for each participating user. The participating terminal, thus registered to the group, receives the network address of the selected port of the message server, to be used for future transmission of messages to terminals of the relevant group of terminals via the message server.

After a terminal is thus registered to a certain group, for transmitting a message from the terminal to terminals registered for the same group of terminals the terminal calls the network address of the selected port of the message server and transmits its message. The terminal's own network address is transmitted to the selected port by the transmission network (by means of "Calling Line Identification" CLI) or, if network CLI is disabled, by the terminal itself.
After reception of the message (and the terminal's own telephone number e.g. via CLI) the message server matches the combination of the server port called by the terminal and the calling terminal's network address with previously registered <server port - terminal address> combinations. If the <server port - terminal address> combination of the calling terminal matches with one of the registered <server port - terminal address> combinations the valid terminal group identifier will be found. The message server reads the network addresses of all terminals belonging to the found terminal group and transmits copies of the message received from the calling terminal, to the network addresses of the remaining group member terminals.

As SMS via (mobile) telephony is a very popular medium, preferrably, the messages have one kind of SMS-format, the terminals being SMS enabled terminals and the message server being connected, via said network ports, with an SMS enabled transmission network, e.g. mobile or fixed telephony network.

Instead of a distinct group identifier, the group identifier may be formed by a (unique) combination of the network address of one terminal, e.g. the terminal of the "founder" of a (new) SMSgroup, and one network port of the message server. The user of that terminal, being the group's "founder", preferrably may act as group "administator", having administrator accession rights to the relevant part of the group register. The term "administator" refers to computer networking practices, where administrator (accession) rights are assigned to a network administrator, who has the rights e.g. to modify rights of "normal" users, to add or delete users etc. In the same meaning the SMS group founder preferrably has the rights to add or delete SMS group users.

The network server may not only be connectable via the telephony network, but also via an IP network (internet) to which data terminals (PS etc.) are connected. In that case, the user acting as the group administrator preferrably has administrator accession rights to the group register via the IP network. In that way management of the relevant SMS group is more convenient than via an SMS enabled telephone keyboard.

### Brief Description of the Drawings

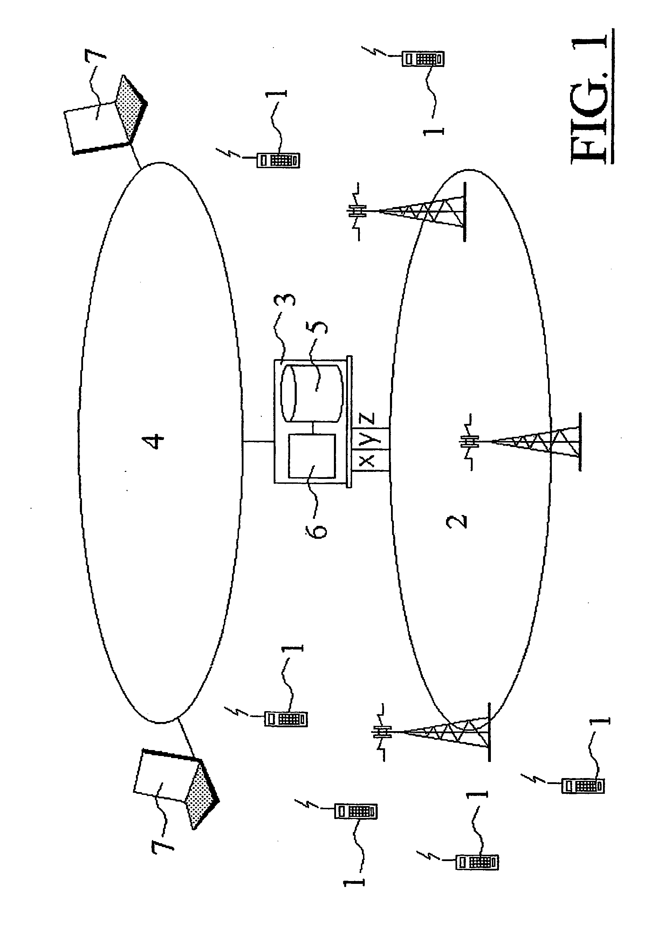

Figure 1 shows schematicly an embodiment of a system enbaled to execute the method according the invention.

### Detailed Description of the Drawings

Figure 1 shows a system for transmitting messages from individual user terminals 1 to groups of user terminals via a (telephony) transmission network 2, under control of a message server 3. Each terminal 1 has a network address, e.g. 31611111111, 31622222222, 31633333333, etc. while the message server 3 comprises various network ports, e.g. x,y,z, which are accessable by the terminals. The message server 3, moreover, comprises a group register 5 for registering, under control of a server processor 6, for each group of terminals a group identifier (ID) and for generating and registering per terminal assigned to a group, a link to the group ID, comprising the terminal's network address and one of the server's network ports. The network port has to chosen, by the server processor 6, so that the combination of the terminal's network address and the server's network port is not already registered for another group identifier; in other words, each link has to be made unique by chosing the right network port (e.g. x, y or z). For instance, a user group I has the follwing members:

| Group | ID Member | Term. address | Server port |
|---|---|---|---|
| I | A | 31611111111 | x |
| I | B | 31622222222 | x |
| I | C | 31633333333 | x |
| I | D | 31644444444 | x |
| I | P | 31655555555 | x |
| I | Q | 31666666666 | x |
| I | R | 31677777777 | x |

In this example, each link, consisting of the terminal network address (its telephone number) and the server port, is unique. Expanding the example with a second user group, may present the following:

| Group | ID Member | Term. address | Server port |
|---|---|---|---|
| II | D | 31611111111 | y |
| II | E | 31622222222 | x |
| II | F | 31633333333 | x |
| II | P | 31655555555 | y |
| II | Q | 31666666666 | y |

As group members (terminals or users) A, P and Q were already members of I, to generate a unique link <terminal address - server port> the processor 6 now selects port y instead of port x. In other words, the membership of e.g. terminal P of group I is characterised by the (unique) link <(telephone number) 31655555555 - (server port) x >, while for SMS group II the link becomes <telephone number 31655555555 - server port y >. In the same way, terminal P's membership of group I is characterised by the link <31655555555 - x> and its membership of group II by <31655555555 - y>.
In the same way several groups can be registered, in group register 5, under control of processor 6:

| Group | ID Member | Term. address | Server port |
|---|---|---|---|
| I | A | 31611111111 | x |
| I | B | 31622222222 | x |
| I | C | 31633333333 | x |
| I | D | 31644444444 | x |
| I | P | 31655555555 | x |
| I | Q | 31666666666 | x |
| I | R | 31677777777 | x |
| | | | |
| II | D | 31611111111 | y |
| II | E | 31622222222 | x |
| II | F | 31633333333 | x |
| II | P | 31655555555 | y |
| II | Q | 31666666666 | y |
| | | | |
| III | A | 31611111111 | y |
| III | B | 31622222222 | y |
| III | D | 31644444444 | z |
| III | Q | 31666666666 | z |
| III | R | 31677777777 | y |
| | | | |
| IV | E | 31622222222 | Y |
| IV | F | 31633333333 | Y |
| IV | G | 31688888888 | x |
| IV | P | 31655555555 | z |
| IV | R | 31677777777 | z |

From the above, it appears that the various terminals are registered to different groups, alway using their own telephone number and one of only three (in this example) server ports. and thus only three server telephone connections to the network 2.
Sorted to terminal/member:

| | | | |
|---|---|---|---|
| I | A | 31611111111 | x |
| III | A | 31611111111 | y |
| | | | |
| I | B | 31622222222 | x |
| III | B | 31622222222 | y |
| | | | |
| I | D | 31644444444 | x |
| II | D | 31611111111 | y |
| III | D | 31644444444 | z |
| II | E | 31622222222 | x |
| IV | E | 31622222222 | Y |
| | | | |
| II | F | 31633333333 | x |
| IV | F | 31633333333 | Y |
| | | | |
| I | P | 31655555555 | x |
| II | P | 31655555555 | y |
| IV | P | 31655555555 | z |
| | | | |
| I | Q | 31666666666 | x |
| II | Q | 31666666666 | y |
| III | Q | 31666666666 | z |
| | | | |
| I | R | 31677777777 | x |
| III | R | 31677777777 | y |
| IV | R | 31677777777 | z |

By always selecting a server port which forms, together with the relevant terminal's telephone number, a unique link, many SMS user groups can be formed, only using few server ports.

The server processor 3 transmits to the terminal 1 registered to said group or terminals (I...IV) the network address of the selected port (x,y,z) of the message server, to be used for future transmission of messages to terminals of the relevant group of terminals.

The server processor 6, moreover, comprises means for receiving a message from a calling terminal and for receiving the calling terminal's own network address, by means of CLI, e.g. calling telephone number 31655555555. The server processor 6 also comprises means for matching the combination of the server port, e.g. y, called by the terminal and the calling terminal's network address, e.g. 31655555555, with the <terminal address - server port> combinations, registered in the group register. The matchin process will result in one valid terminal group: < 31655555555 - y > will result in, see above, identifying SMS group II, where the calling terminal previously was registered as member P, with unique link <31655555555-Y>.
Next, the server processor, reads, from the group register 5, the network addresses of the remaining terminals belonging to the found terminal group and transmits copies of the message received from terminal 31655555555 (member P) to the network addresses of the remaining terminals of SMS group II, viz. to the telephone numbers:

| | | | |
|---|---|---|---|
| II | D | 31611111111 | y |
| II | E | 31622222222 | x |
| II | F | 31633333333 | x |
| II | P | 31655555555 | y |
| II | Q | 31666666666 | y |

The server processor 6 may assign the network address of each first registered terminal per group of terminals as identifier for a group administator, having administrator rights to the relevant part of the group register. Those administrator right may comprise addition of deletion of new members etc. In a preferred option, the "founder"/"administrator" of a new SMS group may invite a number of terminal users to join his/her SMS group. The invited users may register themselves via their mobile telephone. The server processor 3 makes for each groups member a unique record in the group register, using the new member's teminal telepohne number and -to be selected by the the server processor- one of the server port x, y, or z. Each terminal user cannot be registered to more than the number of ports, in this example three.

Preferrably, the founder/administrator is enabled allowed to manage his/her SMS group(s) via the internet 4, by means of his/her PC or data terminal 7.

## Claims

1. Method for transmitting messages from individual user terminals (1) to groups of user terminals via a transmission network (2) under control of a message server (3), each terminal having a network address and the message server comprising various network ports (x, y, z) which are accessible by the terminals, the method comprising the following steps for registering the relevant groups of terminals:
- a group identifier is registered per group of terminals;
- to register a terminal to one group of terminals, a link is registered, comprising the terminal's network address and a port selected from a plurality of the server's network ports;
the method comprising the step of a transmitting terminal transmitting a message for transmitting the message from the terminal to terminals registered for the same group of terminals, **characterized in that**
the registered link comprises the registering terminal's network address in combination with a selected one of the server's network ports, which port is selected thus that the combination of the terminal's network address and the server's network port is not registered before in combination with another group identifier;
- the registered terminal receives the network address of the selected port of the message server, to be used for future transmission of messages to terminals of the relevant group of terminals via the message server;
the method comprising the following steps for transmitting the message from the transmitting terminal to terminals registered for the same group of terminals:
- the transmitting terminal calls the network address of the selected port of the message server and transmits its message, the transmitting terminal's own network address being transmitted to the selected port by or via the transmission network;
- the message server matches the combination of the server port called by the terminal and the calling terminal's network address with the registered server port-terminal address combinations, resulting in finding the valid terminal group;
- the message server reads the network addresses of the terminals belonging to the found terminal group and transmits copies of the received message to those network addresses.

2. Method according to claim 1, said messages having an SMS-format, the terminals being SMS enabled terminals and the message server being connected, via said network ports, with an SMS enabled transmission network (2).

3. Method according to claim 2, said network being a mobile telecommunications network.

4. Method according to claim 1, said group identifier being a unique combination of the network address of one terminal and one network port of the message server.

5. Method according to claim 4, the terminal of which the network address is included in the group identifier being the terminal of a user acting as a group administrator, having administrator accession rights to the relevant part of the group register.

6. Method according to claim 2, the network server also being connected to an IP network (4), to which data terminals are connected.

7. Method according to claim 5 and 6, wherein the user acting as the group administrator has administrator accession rights to the group register via the IP network.

8. System for transmitting messages from individual user terminals (1) to groups of user terminals via a transmission network (2) under control of a message server (3), each terminal having a network address and the message server having various network ports (x, y, z) which are accessible by the terminals, the message server, moreover, comprising a group register (5) for registering, under control of a server processor (6), for each group of terminals a group identifier and for registering for each terminal assigned to a group of terminals, a link to the relevant group identifier, comprising the terminal's network address; the server processor, moreover, comprising means for receiving a message from a calling terminal and for receiving the calling terminal's own network address, **characterized in that** the link to the relevant group identifier comprises the terminal's network address and one of the server's network ports to be selected, by the server processor, in such way that the combination of the terminal's network address and the server's network port is not already registered before in combination with another group identifier, the server processor transmitting to the terminal registered to said group or terminals the network address of the selected port of the message server, to be used for future transmission of messages to terminals of the relevant group of terminals,
the server processor comprising means for matching the combination of the server port called by the terminal and the calling terminal's network address, with the server port-terminal address combinations registered in the group register, resulting in one valid terminal group; the server processor, moreover, comprising means for reading, from the group register, the network addresses of the terminals belonging to the found terminal group and for transmitting copies of the received message to those network addresses.

9. System according to claim 8, the server processor (6) assigning the network address of each first registered terminal per group of terminals as identifier for a group administrator, having administrator rights to the relevant part of the group register.

## Patentansprüche

1. Verfahren zur Nachrichtenübertragung von einzelnen Nutzerendgeräten (1) zu Gruppen von Nutzerendgeräten über ein Übertragungsnetzwerk (2) unter Steuerung eines Nachrichtenservers (3), wobei jedes Endgerät über eine Netzwerkadresse verfügt und der Nachrichtenserver verschiedene Netzwerkanschlüsse (x, y, z) umfasst, die durch die Endgeräte zugänglich sind, wobei das Verfahren folgende Schritte zum Registrieren der relevanten Gruppen von Endgeräten umfasst:
- ein Gruppenidentifikator ist pro Gruppe von Endgeräten registriert;
- zum Registrieren eines Endgeräts zu einer Gruppe von Endgeräten wird ein Link registriert, umfassend die Netzwerkadresse des Endgeräts und einen Anschluss, ausgewählt aus mehreren Netzwerkanschlüssen des Servers;
wobei das Verfahren den Schritt umfasst, in dem ein Übertragungsendgerät eine Nachricht überträgt zur Übertragung der Nachricht von dem Endgerät zu Endgeräten, die für dieselbe Gruppe von Endgeräten registriert sind, **dadurch gekennzeichnet, dass**
der registrierte Link die Netzwerkadresse des registrierenden Endgeräts umfasst, in Kombination mit einem ausgewählten der Netzwerkanschlüsse des Servers, welcher Anschluss so ausgewählt ist, dass die Kombination der Netzwerkadresse des Endgeräts und des Netzwerkanschlusses des Servers nicht zuvor in Kombination mit einem anderen Gruppenidentifikator registriert wurde;
das registrierte Endgerät die Netzwerkadresse des ausgewählten Anschlusses des Nachrichtenservers empfängt, zur Verwendung für zukünftige Übertragung von Nachrichten zu Endgeräten der relevanten Gruppe von Endgeräten über den Nachrichtenserver;
wobei das Verfahren folgende Schritte zur Übertragung der Nachricht vom übertragenden Endgerät zu Endgeräten, die für dieselbe Gruppe von Endgeräten registriert sind:
- das übertragende Endgerät ruft die Netzwerkadresse des ausgewählten Anschlusses des Nachrichtenservers an und überträgt seine Nachricht, wobei die eigene Netzwerkadresse des übertragenden Endgeräts an den ausgewählten Anschluss durch oder über das Übertragungsnetzwerk übertragen wird;
- der Nachrichtenserver vergleicht die Kombination des vom Endgerät angerufenen Serveranschlusses und die Netzwerkadresse des anrufenden Endgeräts mit den registrierten Kombinationen Serveranschluss-Endgerätadresse, so dass die gültige Endgerätgruppe gefunden wird;
- der Nachrichtenserver liest die Netzwerkadressen der zu der gefundenen Endgerätgruppe gehörenden Endgeräte und überträgt Kopien der empfangenen Nachricht an diese Netzwerkadressen.

2. Verfahren nach Anspruch 1, wobei die Nachrichten ein SMS-Format aufweisen, die Endgeräte SMS-fähige Endgeräte sind und der Nachrichtenserver über die Netzwerkanschlüsse mit einem SMS-fähigen Übertragungsnetzwerk (2) verbunden ist.

3. Verfahren nach Anspruch 2, wobei das Netzwerk ein mobiles Telekommunikationsnetzwerk ist.

4. Verfahren nach Anspruch 1, wobei der Gruppenidentifikator eine eindeutige Kombination aus der Netzwerkadresse eines Endgeräts und einem Netzwerkanschluss des Nachrichtenservers ist.

5. Verfahren nach Anspruch 4, wobei das Endgerät, dessen Netzwerkadresse im Gruppenidentifikator enthalten ist, das Endgerät eines Nutzers ist, der als Gruppenadministrator fungiert und der Administratorrechte zu dem relevanten Teil des Gruppenregisters hat.

6. Verfahren nach Anspruch 2, wobei der Netzwerkserver ebenfalls verbunden ist mit einem IP-Netzwerk (4), mit dem Datenendgeräte verbunden sind.

7. Verfahren nach Anspruch 5 und 6, wobei der Nutzer, der als Gruppenadministrator fungiert, über das IP-Netzwerk Administratorzugriffsrechte auf das Gruppenregister hat.

8. System zur Nachrichtenübertragung von einzelnen Nutzerendgeräten (1) zu Gruppen von Nutzerendgeräten über ein Übertragungsnetzwerk (2) unter Steuerung eines Nachrichtenservers (3), wobei jedes Endgerät über eine Netzwerkadresse verfügt und der Nachrichtenserver verschiedene Netzwerkanschlüsse (x, y, z) umfasst, die durch die Endgeräte zugänglich sind, wobei der Nachrichtenserver ferner ein Gruppenregister (5) umfasst, um unter Steuerung des Serverprozessors (6) für jede Gruppe von Endgeräten einen Gruppenidentifikator zu registrieren und um für jedes Endgerät, das einer Gruppe von Endgeräten zugewiesen ist, einen Link zu dem relevanten Gruppenidentifikator zu registrieren, umfassend die Netzwerkadresse des Endgeräts; wobei der Serverprozessor ferner Mittel zum Empfangen einer Nachricht von einem anrufenden Endgerät und zum Empfangen der eigenen Netzwerkadresse des anrufenden Endgeräts umfasst, **dadurch gekennzeichnet, dass** der Link zu dem relevanten Gruppenidentifikator die Netzwerkadresse des Endgeräts und einen der Netzwerkanschlüsse des Servers umfasst, der vom Serverprozessor so auszuwählen ist, so dass die Kombination der Netzwerkadresse des Endgeräts und des Netzwerkanschlusses des Servers nicht bereits zuvor in Kombination mit einem anderen Gruppenidentifikator registriert wurde, wobei der Serverprozessor zu dem Endgerät, das für die Gruppe registriert ist, oder zu Endgeräten die Netzwerkadresse des ausgewählten Anschlusses des Nachrichtenservers überträgt, zur Verwendung für zukünftige Übertragung von Nachrichten zu Endgeräten der relevanten Gruppe von Endgeräten,
wobei der Serverprozessor Mittel umfasst, um die Kombination des vom Endgerät angerufenen Serveranschlusses und der Netzwergadresse des anrufenden Endgeräts mit den im Gruppenregister registrierten Kombinationen Serveranschluss-Endgerätadresse zu vergleichen , was zu einer gültigen Endgerätgruppe führt; wobei der Serverprozessor ferner Mittel umfasst, um aus dem Gruppenregister die Netzwerkadressen der Endgeräte, die zu der gefundenen Endgerätgruppe gehören, auszulesen und Kopien der empfangenen Nachricht an diese Netzwerkadressen zu übertragen.

9. System nach Anspruch 8, wobei der Serverprozessor (6) die Netzwerkadresse jedes ersten registrierten Endgeräts pro Gruppe von Endgeräten als Identifikator für einen Gruppenadministrator mit Administratorrechten für den relevanten Teil des Gruppenregisters zuweist.

## Revendications

1. Procédé pour transmettre des messages depuis des terminaux d'utilisateur individuels (1) à des groupes de terminaux d'utilisateur par l'intermédiaire d'un réseau de transmission (2) sous commande d'un serveur de messages (3), chaque terminal ayant une adresse réseau et le serveur de messages comprenant divers accès réseau (x, y, z) qui sont accessibles par les terminaux, le procédé comprenant les étapes suivantes destinées à enregistrer les groupes de terminaux concernés:
- un identifiant de groupe est enregistré par groupe de terminaux ;
- pour enregistrer un terminal dans un groupe de terminaux, une liaison est enregistrée, comprenant l'adresse réseau du terminal et un accès sélectionné parmi plusieurs accès réseau du serveur ;
le procédé comprenant l'étape consistant à transmettre à un terminal de transmission un message pour transmission du message à partir du terminal vers des terminaux enregistrés du même groupe de terminaux, **caractérisé en ce que**
la liaison enregistrée comprend l'adresse réseau du terminal d'enregistrement en combinaison avec un accès sélectionné parmi les accès réseau du serveur, lequel accès est sélectionné de sorte que la combinaison de l'adresse réseau du terminal et de l'accès réseau du serveur n'est pas enregistrée avant en combinaison avec un autre identifiant de groupe ;
le terminal enregistré reçoit l'adresse réseau de l'accès sélectionné du serveur de message, à utiliser pour une transmission future de messages à des terminaux du groupe de terminaux concerné par l'intermédiaire du serveur de messages ;
le procédé comprenant les étapes suivantes destinées à transmettre le message provenant du terminal de transmission aux terminaux enregistrés pour le même groupe de terminaux :
- le terminal de transmission appelle l'adresse réseau de l'accès sélectionné du serveur de message et transmet son message, l'adresse réseau du réseau propriétaire du terminal de transmission étant transmise à l'accès sélectionné par le réseau de transmission ou via celui-ci ;
- le serveur de message apparie la combinaison de l'accès serveur appelé par le terminal et de l'adresse réseau du terminal appelant avec les combinaisons d'adresses accès- terminal de serveur enregistré, le résultat étant la découverte du groupe de terminaux valide ;
le serveur de message lit les adresses réseau des terminaux appartenant au groupe de terminaux trouvé et transmet des copies du message reçu à ces adresses réseau.

2. Procédé selon la revendication 1, les messages ayant un format de SMS, les terminaux étant des terminaux validés pour SMS et le serveur de message étant connecté, via les accès réseau, avec un réseau de transmission validé pour SMS (2).

3. Procédé selon la revendication 2, le réseau étant un réseau de télécommunications mobiles.

4. Procédé selon la revendication 1, l'identifiant de groupe étant une combinaison unique de l'adresse réseau d'un terminal et d'un accès réseau du serveur de message.

5. Procédé selon la revendication 4, le terminal dont l'adresse réseau est incluse dans l'identifiant de groupe étant le terminal d'un utilisateur agissant en tant qu'administrateur de groupe, ayant des droits d'accès d'administrateur à la partie concernée du registre de groupe.

6. Procédé selon la revendication 2, le serveur de réseau étant également connecté à un réseau IP (4), auquel des terminaux de données sont connectés.

7. Procédé selon les revendications 5 et 6, dans lequel l'utilisateur agissant en tant qu'administrateur de groupe a des droits d'accès d'administrateur au registre de groupe via le réseau IP.

8. Système pour transmettre des messages depuis des terminaux d'utilisateur individuels (1) à des groupes de terminaux d'utilisateur via un réseau de transmission (2) sous la commande d'un serveur de messages (3), chaque terminal ayant une adresse réseau et le serveur de message ayant divers accès réseau (x, y, z) qui sont accessibles par les terminaux, le serveur de messages, de plus, comprenant un registre de groupes (5) pour enregistrer, sous la commande d'un processeur de serveur (6), pour chaque groupe de terminaux un identifiant de groupe et pour enregistrer pour chaque terminal assigné à un groupe de terminaux, une liaison vers l'identifiant de groupe concerné, comprenant l'adresse réseau du terminal ; le processeur de serveur, en outre, comprenant des moyens pour recevoir un message provenant d'un terminal appelant et pour recevoir l'adresse réseau propriété du terminal appelant, **caractérisé en ce que** la liaison vers l'identifiant de groupe concerné comprend l'adresse réseau du terminal et un parmi les accès réseau du serveur à sélectionner, par le processeur de serveur, de telle sorte que la combinaison constituée de l'adresse réseau du terminal et de l'accès réseau du serveur n'est pas déjà enregistrée avant en combinaison avec un autre identifiant de groupe, le processeur de serveur transmettant au terminal ou aux terminaux enregistrés dans le groupe l'adresse réseau de l'accès sélectionné du serveur de message, à utiliser pour une transmission future de messages vers des terminaux du groupe de terminaux concerné,
le processeur de serveur comprenant des moyens pour apparier la combinaison de l'accès de serveur appelé par le terminal et de l'adresse réseau du terminal appelant, avec des combinaisons d'adresses accès-terminal de serveur enregistrées dans le registre de groupes, le résultat étant un groupe de terminaux valides ; le processeur de serveur, de plus, comprenant des moyens pour lire, dans le registre de groupes, les adresses réseau des terminaux appartenant au groupe de terminaux trouvé et pour transmettre des copies du message reçu à ces adresses réseau.

9. Système selon la revendication 8, le processeur de serveur (6) assignant l'adresse réseau de chaque premier terminal enregistré par groupe de terminaux comme identifiant pour un administrateur de groupe, ayant des droits d'administrateur pour la partie concernée du registre de groupe.
